# FASCICULE DE BREVET EUROPEEN

(11) **EP 2 177 798 B1**
(45) Date de publication et mention de la délivrance du brevet: **01.05.2013**
(21) Numéro de dépôt: 09172113.4
(22) Date de dépôt: 02.10.2009
(51) Int. Cl.: F16K 1/30, F17C 13/04

(54) **Ensemble comprenant un logement alimenté en fluide comprimé et muni d'un dispositif de limitation de la pression**
Baugruppe, die ein mit komprimierter Flüssigkeit versorgtes Gehäuse umfasst und mit einer Druckbegrenzungsvorrichtung ausgestattet ist
Assembly comprising a housing supplied with compressed fluid and equiped with a pressure-limitting device

(30) Priorité: 15.10.2008 FR 0857009
(43) Date de publication de la demande: 21.04.2010
(73) Titulaire: SAGEM DEFENSE SECURITE, 75015 Paris (FR)
(72) Inventeur: Donce, Lucien, 75015 Paris (FR); Fraysse, Vincent, 75015 Paris (FR)
(74) Mandataire: Cabinet Plasseraud

(56) Documents cités:
- WO-A-2004/074738
- US-A- 4 522 227

## Description

L'invention concerne un ensemble comprenant un logement alimenté en fluide comprimé et muni d'un dispositif de limitation de la pression.

Plus précisément, l'invention concerne un ensemble destiné à refroidir en particulier un appareil électronique par détente d'un fluide. On connait déjà un ensemble de ce type comprenant :
- un logement délimité par une paroi étanche,
- un dispositif d'alimentation comprenant un canal d'alimentation débouchant dans le logement et adapté pour alimenter le logement en fluide sous pression par le canal d'alimentation, et
- un dispositif de limitation de pression, ledit dispositif de limitation de pression comprenant un canal d'évacuation passant à travers la paroi et un dispositif d'obturation.

La détente du fluide, généralement un gaz neutre tel que l'argon ou l'azote, provoque une baisse de température permettant de refroidir l'appareil électronique, en particulier un capteur, à une température de l'ordre d'une centaine de Kelvin. Le dispositif de limitation de pression évite que l'accumulation de fluide n'engendre dans le logement une pression trop élevée, dommageable pour l'appareil électronique.

On connait déjà des dispositifs de limitation de la pression du type soupape de sécurité. La soupape assure en outre une fonction d'herméticité du logement pour le stockage de l'ensemble, afin d'isoler l'appareil du milieu environnant. Toutefois, la dynamique des dispositifs de limitation de la pression du type soupape de sécurité connus ne permettent pas de faire chuter la pression à l'intérieur du logement sans perturber le fonctionnement de l'appareil électronique à refroidir, notamment pour ce qui concerne les dispositifs optiques et cryogéniques.

Le document WO-A-2004/074738 décrit les caractéristiques techniques exposées dans le préambule de la revendication 1.

A cet effet, conformément à l'invention, le dispositif d'obturation autorise l'évacuation du fluide contenu dans le logement par ledit canal d'évacuation lorsque le canal d'alimentation est alimenté en fluide sous pression.

Ainsi, la sécurité est améliorée par le fait que l'on prévoit l'évacuation de fluide simultanément à l'introduction de fluide.

Selon une autre caractéristique conforme à l'invention, de préférence le dispositif d'obturation comprend :
- un piston coulissant dans un cylindre ménagé dans un corps entre une position active dans laquelle il obture le canal d'évacuation et une position inactive dans laquelle il autorise l'évacuation du fluide contenu dans le logement par ledit canal d'évacuation, et
- une chambre en communication avec le canal d'alimentation et présentant un volume supérieur lorsque le piston est en position inactive que lorsque le piston est en position active.

Cette solution est simple à mettre en oeuvre et efficace.

Selon une caractéristique complémentaire conforme à l'invention, le dispositif d'obturation comprend de préférence en outre un ressort de rappel exerçant une pression sur le piston tendant à le disposer en position active.

L'obturation du canal d'évacuation peut ainsi être obtenue simplement et automatiquement lorsque le canal d'alimentation n'est plus alimenté en fluide sous pression.

Selon une autre caractéristique conforme à l'invention, le canal d'évacuation s'étend de préférence au moins en partie entre le piston et le cylindre.

La simplicité, la compacité et l'efficacité de l'ensemble peuvent ainsi être améliorées.

Selon une caractéristique complémentaire conforme à l'invention, de préférence le canal d'évacuation comprend au moins une portion formée par une rainure s'étendant transversalement à la direction de coulissement du piston dans le cylindre.

Ainsi, on assure simplement la circulation du fluide dans le canal d'évacuation lorsque le piston est en position inactive.

Selon une autre caractéristique conforme à l'invention, de préférence le dispositif d'obturation comprend en outre un joint torique pressé de manière étanche entre le piston et le cylindre lorsque le piston est en position active, ledit joint torique étant à l'écart du piston ou du cylindre lorsque le piston est en position inactive.

Cette solution assure simplement et efficacement l'obturation et la libération du canal d'évacuation.

Selon encore une autre caractéristique conforme à l'invention, l'ensemble comprend en outre de préférence un flasque contre lequel le piston vient en butée lorsqu'il est en position inactive et le flasque est réglable, afin de modifier l'amplitude du déplacement du piston entre sa position active et sa position inactive.

Ainsi, la section du canal d'évacuation lorsque le piston est en position inactive peut être réglée, afin d'ajuster aisément la pression maximale dans le logement.

Selon une autre caractéristique conforme à l'invention, le canal d'évacuation comprend de préférence une portion s'étendant hors du cylindre entre le canal d'alimentation et le corps.

De préférence, conformément à l'invention, l'ensemble présente en outre les caractéristiques suivantes :
- le canal d'alimentation présente une première partie s'étendant de l'extérieur du logement jusqu'à ladite chambre et une deuxième partie s'étendant de ladite chambre jusqu'à l'intérieur du logement,
- la première partie du canal d'alimentation est maintenue par rapport au cylindre,
- un dispositif d'étanchéité dynamique coopère de manière étanche d'une part avec la première partie du canal d'alimentation et d'autre part avec un alésage réalisé dans le piston, et
- la chambre en communication avec le canal d'alimentation est disposée dans le piston et délimitée par le dispositif d'étanchéité dynamique.

Cette solution est simple robuste et compacte.

Selon une caractéristique complémentaire conforme à l'invention, ledit dispositif d'étanchéité dynamique comprend de préférence une pluralité de rondelles entre lesquelles est disposée une pluralité de joints toriques.

Ainsi, la première partie du canal d'alimentation peut être aisément désaccouplée, afin notamment de pouvoir changer la source d'alimentation en fluide.

Selon une autre caractéristique conforme à l'invention, l'alésage du piston est de préférence coaxial au cylindre.

La compacité et la simplicité de l'ensemble sont ainsi encore améliorées.

Conformément à l'invention, l'ensemble présente en outre de préférence les caractéristiques suivantes :
- la paroi du logement présente un passage, et
- le corps est disposé dans ledit passage.

L'ensemble est ainsi efficacement maintenu et de manière compacte sur le logement.

De manière complémentaire et conformément à l'invention, l'ensemble présente en outre de préférence les caractéristiques suivantes :
- le corps présente un épaulement et une surface extérieure filetée,
- l'ensemble comprend en outre un écrou de fixation vissé sur la surface extérieure filetée du corps, et
- la paroi est fixée entre l'épaulement du corps et ledit écrou de fixation.

La simplicité de l'ensemble et sa mise en oeuvre sont ainsi encore améliorées.

D'autres caractéristiques et avantages de la présente invention apparaîtront dans la description détaillée suivante, se référant aux dessins annexés dans lesquels :

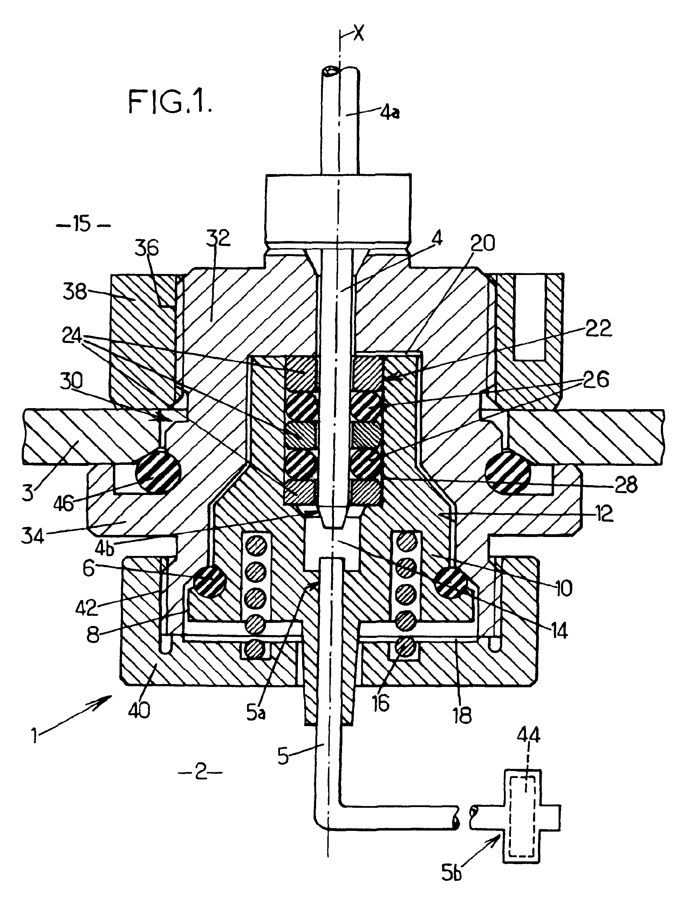

- La figure 1 illustre un ensemble conforme à l'invention en coupe transversale, en l'absence d'alimentation en fluide sous pression,

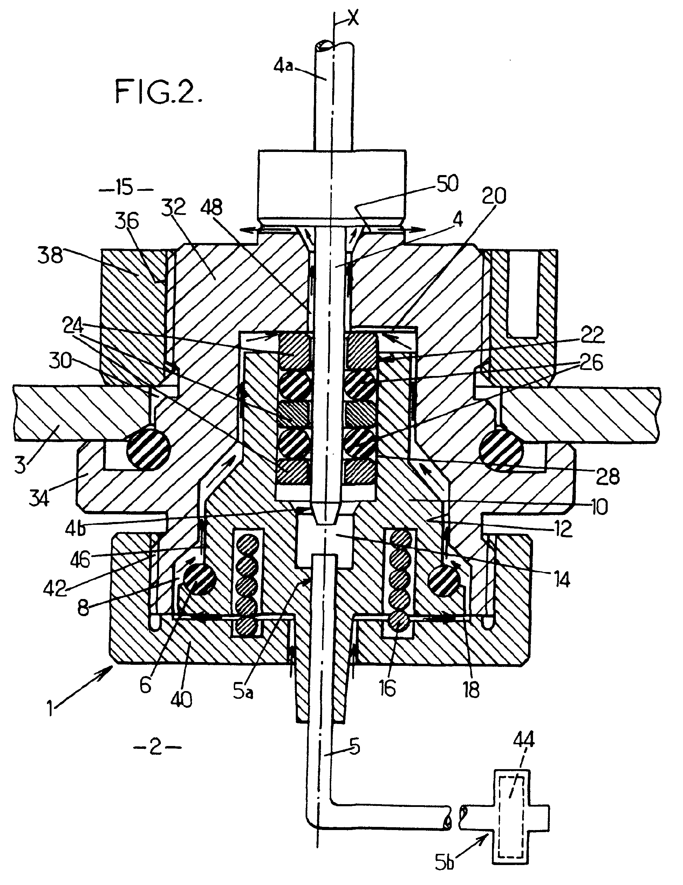

- La figure 2 illustre l'ensemble lorsqu'il est alimenté en fluide sous pression.

Les figures illustrent un ensemble 1 comprenant essentiellement un logement 2, un dispositif d'alimentation 4, 5 et un dispositif de limitation de pression 8, 10, 12, 14, 16.

Le logement 2 est séparé du milieu environnant 15 par une paroi étanche 3 et renferme un appareil 44 à refroidir par détente d'un gaz sous pression.

Le dispositif d'alimentation comprend un canal d'alimentation présentant une première partie 4 et une deuxième partie 5. La première partie 4 du canal d'alimentation présente une extrémité amont 4a reliée à une source (non représentée) de fluide sous pression, en particulier du gaz, disposée à l'extérieur du logement 2 et une extrémité aval 4b débouchant dans une chambre 14. La deuxième partie du canal d'alimentation présente une extrémité amont 5a communiquant avec la chambre 14 et une extrémité aval 5b à proximité de laquelle est disposé l'appareil 44 à refroidir.

Le dispositif de limitation de pression comprend essentiellement un canal d'évacuation 8 et un dispositif d'obturation du canal d'évacuation 8 comprenant un cylindre 12 dans lequel coulisse un piston 10 suivant une direction de coulissement X. Le piston 10 est apte à se déplacer suivant la direction de coulissement X entre une position active et une position inactive. Le canal d'évacuation 8 s'étend essentiellement entre le piston 10 et le cylindre 12. Le dispositif d'obturation comprend en outre un joint torique 6 qui est pressé de manière étanche entre le piston 10 et le cylindre 12 lorsque le piston 10 est en position active, de sorte qu'il obture le canal d'évacuation 8. Lorsque le piston 10 est en position inactive, le joint torique 6, porté par le piston 10, s'étend à l'écart du cylindre 12, de sorte qu'il autorise la circulation de gaz dans le canal d'évacuation 8.

Le cylindre 12 est réalisé dans un corps 32 globalement cylindrique s'étendant à travers un passage 30 réalisé dans la paroi 3 du logement 2. Le corps 32 intègre un épaulement 34 s'étendant à l'intérieur du logement 2 et une surface extérieure filetée 36 s'étendant dans le milieu environnant 15, à l'extérieur du logement 2. La paroi 3 est fixée entre l'épaulement 34 et un écrou 38 vissé sur la surface extérieure filetée 36 du corps 32, afin de fixer le corps 32 sur la paroi 3. La fixation du corps 32 sur la paroi 3 est rendue étanche par la présence d'un joint torique 46 s'étendant entre la paroi 3 et le corps 32. Le corps 32 présente en outre une surface extérieure filetée 42 s'étendant à l'intérieur du logement 2. Un flasque 40 est vissé sur la surface extérieure filetée 42.

Lorsque le piston 10 est en position inactive, il vient en butée suivant la direction de coulissement X contre le flasque 40. En vissant plus ou moins le flasque 40 sur la surface extérieure filetée 42 du corps 32, on modifie la section de passage entre le joint torique 6 et le cylindre 12, lorsque le piston 10 est en position inactive, ce qui permet de calibrer le débit du gaz dans le canal d'évacuation 8.

Des rainures radiales 18 sont réalisées dans le flasque 40, afin de permettre la circulation du gaz dans le canal d'évacuation 8 entre le flasque 40 et le piston 10, lorsque le piston 10 est en position inactive.

Le dispositif de limitation de pression comprend en outre un ressort de rappel 16 prenant appui sur le flasque 40 et exerçant une pression sur le piston 10 tendant à l'amener en position active.

La première partie 4 du canal d'alimentation est maintenue par rapport au corps 32 et son extrémité aval 4b est disposée dans la chambre 14 ménagée dans le piston 10. Un dispositif d'étanchéité dynamique 22 est disposé de manière étanche autour de la première partie 4 du canal d'alimentation, à proximité de l'extrémité aval 4b. Le dispositif d'étanchéité dynamique 22 est en outre reçu dans un alésage 28 réalisé dans le piston 10. Le dispositif d'étanchéité dynamique 22 comprend une pluralité de rondelles 24 entre lesquelles sont interposés une pluralité de joints toriques 26. Les rondelles sont réalisées en matériau rigide, tel que de l'acier, tandis que les joints toriques sont réalisés en matériau souple élastique, tel que du caoutchouc. Les rondelles 24 présentent une section parallélépipédique, sensiblement carrée ou rectangulaire. Dans le mode de réalisation illustré, les joints toriques 26 présentent une section circulaire. En variante, cette section pourrait être elliptique, carrée ou rectangulaire.

Le dispositif d'étanchéité dynamique 22 réalise l'étanchéité de manière dynamique entre la première partie 4 du canal d'alimentation et le piston 10. Il délimite ainsi la chambre 14.

Lorsque la première partie 4 du canal d'alimentation est alimenté en gaz sous pression, une pression élevée existe à l'intérieur de la chambre 14. Cette pression s'exerce sur le piston 10 et le dispositif d'étanchéité dynamique 22. Elle tend à augmenter le volume de la chambre 14 en déplaçant le piston 10 par rapport au dispositif d'étanchéité dynamique 22 et par rapport au corps 32, par coulissement suivant la direction de coulissement X et à l'amener en position inactive. Le dispositif d'étanchéité dynamique 22 coulisse alors de manière étanche dans l'alésage 28 dans lequel il est reçu.

Du gaz sous pression est alors introduit dans le logement 2 par l'intermédiaire de la deuxième portion 5 du canal d'alimentation et simultanément, le piston étant en position inactive, du gaz contenu dans le logement 2 s'échappe par le canal d'évacuation 8 vers le milieu environnant 15, tel qu'illustré par les flèches 46.

En outre, des rainures radiales 20 sont ménagées radialement à la direction de coulissement X dans le corps 32 afin de permettre le passage du gaz entre le dispositif d'étanchéité dynamique 22 et le corps 32. De plus, les rainures radiales 20 communiquent avec une extrémité d'un espace 48 s'étendant suivant la direction de coulissement X et ménagé entre le dispositif d'alimentation 4 et le corps 32. Enfin, des rainures radiales 50 communiquant avec l'autre extrémité de l'espace 48 sont ménagées dans le corps 32 radialement à la direction de coulissement X. Les rainures radiales 20, l'espace 48 et les rainures radiales 50 constituent successivement une partie finale du canal d'évacuation 8, laquelle ne s'étend pas entre le piston 10 et le cylindre 12. L'espace 48 et les rainures radiales 50 s'étendent hors du cylindre 12.

## Revendications

1. Ensemble (1) comprenant :
- un logement (2) délimité par une paroi étanche (3),
- un dispositif d'alimentation comprenant un canal d'alimentation (4, 5) débouchant dans le logement (2) et adapté pour alimenter le logement (2) en fluide sous pression par le canal d'alimentation (4, 5), et
- un dispositif de limitation de pression, ledit dispositif de limitation de pression comprenant un canal d'évacuation (8) passant à travers la paroi (3) et un dispositif d'obturation,
ledit ensemble étant **caractérisé en ce que** le dispositif d'obturation autorise l'évacuation du fluide contenu dans le logement (2) par ledit canal d'évacuation (8) lorsque le canal d'alimentation (4, 5) est alimenté en fluide sous pression.

2. Ensemble selon la revendication 1, dans lequel le dispositif d'obturation comprend :
- un piston (10) coulissant dans un cylindre (12) ménagé dans un corps (32) entre une position active dans laquelle il obture le canal d'évacuation (8) et une position inactive dans laquelle il autorise l'évacuation du fluide contenu dans le logement (2) par ledit canal d'évacuation (8), et
- une chambre (14) en communication avec le canal d'alimentation (4, 5) et présentant un volume supérieur lorsque le piston (10) est en position inactive que lorsque le piston (10) est en position active.

3. Ensemble selon la revendication précédente, dans lequel le dispositif d'obturation comprend en outre un ressort de rappel (16) exerçant une pression sur le piston (10) tendant à le disposer en position active.

4. Ensemble selon l'une quelconque des revendications 2 ou 3, dans lequel le canal d'évacuation (8) s'étend au moins en partie entre le piston (10) et le cylindre (12).

5. Ensemble selon la revendication 4, dans lequel le canal d'évacuation (8) comprend au moins une portion formée par une rainure (18, 20) s'étendant transversalement à la direction de coulissement (X) du piston (10) dans le cylindre (12).

6. Ensemble selon la revendication 4 ou la revendication 5, dans lequel le dispositif d'obturation comprend en outre un joint torique (6) pressé de manière étanche entre le piston (10) et le cylindre (12) lorsque le piston (10) est en position active, ledit joint torique (6) étant à l'écart du piston (10) ou du cylindre (12) lorsque le piston (10) est en position inactive.

7. Ensemble selon l'une quelconque des revendications 4 à 6, comprenant en outre un flasque (40) contre lequel le piston (10) vient en butée lorsqu'il est en position inactive et le flasque (40) est réglable, afin de modifier l'amplitude du déplacement du piston (10) entre sa position active et sa position inactive.

8. Ensemble selon l'une quelconque des revendications 2 à 7, dans lequel le canal d'évacuation (8) comprend une portion (48, 50) s'étendant hors du cylindre (12) entre le canal d'alimentation (4) et le corps (32).

9. Ensemble selon l'une quelconque des revendications 2 à 8, dans lequel :
- le canal d'alimentation (4, 5) présente une première partie (4) s'étendant de l'extérieur du logement (2) jusqu'à ladite chambre (14) et une deuxième partie (5) s'étendant de ladite chambre (14) jusqu'à l'intérieur du logement (2),
- la première partie (4) du canal d'alimentation est maintenue par rapport au cylindre (12),
- un dispositif d'étanchéité dynamique (22) coopère de manière étanche d'une part avec la première partie (4) du canal d'alimentation d'autre part avec un alésage (28) réalisé dans le piston (10), et
- la chambre (14) en communication avec le canal d'alimentation (4) est disposée dans le piston (10) et délimitée par le dispositif d'étanchéité dynamique (22).

10. Ensemble selon la revendication précédente dans lequel ledit dispositif d'étanchéité dynamique (22) comprend une pluralité de rondelles (24) entre lesquelles est disposée une pluralité de joints toriques (26).

11. Ensemble selon l'une quelconque des revendications 9 ou 10, dans lequel l'alésage (28) du piston (10) est coaxial au cylindre (12).

12. Ensemble selon l'une quelconque des revendications 2 à 11, dans lequel :
- la paroi (3) du logement (2) présente un passage (30), et
- le corps (32) est disposé dans ledit passage (30).

13. Ensemble selon la revendication précédente, dans lequel :
- le corps (32) présente un épaulement (34) et une surface extérieure filetée (36),
- l'ensemble comprend en outre un écrou de fixation (38) vissé sur la surface extérieure filetée (36) du corps (32), et
- la paroi (3) est fixée entre l'épaulement (34) du corps (32) et ledit écrou de fixation (38).

## Claims

1. Assembly (1) comprising:
- a housing (2) delimited by a sealed wall (3),
- a supply device comprising a supply passage (4, 5) opening into the housing (2) and designed to supply the housing (2) with pressurised fluid via the supply passage (4, 5), and
- a pressure limiting device, said pressure limiting device comprising an evacuation passage (8) extending through the wall (3) and a closure device, said assembly being **characterised in that** the closure device allows the fluid contained in the housing (2) to be evacuated through said evacuation passage (8) when the supply passage (4, 5) is supplied with pressurised fluid.

2. Assembly as claimed in claim 1, in which the closure device comprises:
- a piston (10) sliding in a cylinder (12) arranged in a body (32) between an active position in which it closes the evacuation passage (8) and an inactive position in which it allows the fluid contained in the housing (2) to be evacuated through said evacuation passage (8), and
- a chamber (14) communicating with the supply passage (4, 5) and having a larger volume when the piston (10) is in the inactive position than when the piston (10) is in the active position.

3. Assembly as claimed in the preceding claim, in which the closure device further comprises a return spring (16) exerting pressure on the piston (10) biasing, it into the active position.

4. Assembly as claimed in any one of claims 2 or 3, in which the evacuation passage (8) extends at least partially between the piston (10) and the cylinder (12).

5. Assembly as claimed in claim 4, in which the evacuation passage (8) comprises at least one portion formed by a groove (18, 20) extending transversely to the direction (X) in which the piston (10) slides in the cylinder (12).

6. Assembly as claimed in claim 4 or claim 5, in which the closure device further comprises a sealing 0-ring (6) pressed in a sealing arrangement between the piston (10) and the cylinder (12) when the piston (10) is in the active position, said sealing 0-ring (6) being spaced at a distance apart from the piston (10) or cylinder (12) when the piston (10) is in the inactive position.

7. Assembly as claimed in any one of claims 4 to 6, further comprising a flange (40) against which the piston (10) abuts when it is in the inactive position and the flange (40) can be adjusted in order to change the amplitude of the displacement of the piston (10) between its active position and its inactive position.

8. Assembly as claimed in any one of claims 2 to 7, in which the evacuation passage (8) comprises a portion (48, 50) extending outside the cylinder (12) between the supply passage (4) and the body (32).

9. Assembly as claimed in any one of claims 2 to 8, in which:
- the supply passage (4, 5) has a first part (4) extending outside the housing (2) as far as said chamber (14) and a second part (5) extending from said chamber (14) into the interior of the housing (2),
- the first part (4) of the supply passage is held in position relative to the cylinder (12),
- a dynamic sealing device (22) co-operates in a sealing arrangement with the first part (4) of the supply passage on the one hand and with a bore (28) arranged in the piston (10) on the other hand, and
- the chamber (14) communicating with the supply passage (4) is disposed in the piston (10) and is bounded by the dynamic sealing device (22).

10. Assembly as claimed in the preceding claim, in which said dynamic sealing device (22) comprises a plurality of washers (24) between which a plurality of sealing 0-rings (26) is disposed.

11. Assembly as claimed in any one of claims 9 or 10, in which the bore (28) of the piston (10) is coaxial with the cylinder (12).

12. Assembly as claimed in any one of claims 2 to 11, in which:
- the wall (3) of the housing (2) has a passage (30), and
- the body (32) is disposed in said passage (30).

13. Assembly as claimed in the preceding claim, in which:
- the body (32) has a shoulder (34) and a threaded external surface (36),
- the assembly further comprises a fixing nut (38) screwed onto the threaded external surface (36) of the body (32), and
- the wall (3) is secured between the shoulder (34) of the body (32) and said fixing nut (38).

## Patentansprüche

1. Einheit (1), umfassend:
- eine Lagerung (2), die von einer dichten Wand (3) begrenzt ist,
- eine Versorgungsvorrichtung, umfassend einen Versorgungskanal (4, 5), der in der Lagerung (2) mündet und dazu geeignet ist, die Lagerung (2) mit Fluid unter Druck durch den Versorgungskanal (4, 5) zu versorgen, und
- eine Vorrichtung zur Druckbegrenzung, wobei die Druckbegrenzungsvorrichtung einen Ableitungskanal (8), der durch die Wand (3) verläuft, und eine Verschlussvorrichtung umfasst,
wobei die Einheit **dadurch gekennzeichnet ist, dass** die Verschlussvorrichtung die Ableitung des in der Lagerung (2) enthaltenen Fluids durch den Ableitungskanal (8) gestattet, wenn der Versorgungskanal (4, 5) mit Fluid unter Druck versorgt wird.

2. Einheit nach Anspruch 1, bei der die Verschlussvorrichtung Folgendes umfasst:
- einen Kolben (10), der in einem Zylinder (12), der in einem Körper (32) angeordnet ist, zwischen einer aktiven Position, in der er den Ableitungskanal (8) verschließt, und einer inaktiven Position, in der er die Ableitung des in der Lagerung (2) enthaltenen Fluids durch den Ableitungskanal (8) gestattet, gleitet, und
- eine Kammer (14), die mit dem Versorgungskanal (4, 5) in Verbindung steht und ein größeres Volumen aufweist, wenn sich der Kolben (10) in der inaktiven Position befindet, als wenn sich der Kolben (10) in der aktiven Position befindet.

3. Einheit nach dem vorhergehenden Anspruch, bei der die Verschlussvorrichtung ferner eine Rückstellfeder (16) umfasst, die einen Druck auf den Kolben (10) ausübt, der dazu neigt, ihn in die aktive Position zu bringen.

4. Einheit nach einem der Ansprüche 2 oder 3, bei der sich der Ableitungskanal (8) mindestens teilweise zwischen dem Kolben (10) und dem Zylinder (12) erstreckt.

5. Einheit nach Anspruch 4, bei der der Ableitungskanal (8) mindestens einen Abschnitt umfasst, der von einer Nut (18, 20) gebildet ist, die sich quer zur Gleitrichtung (X) des Kolbens (10) in dem Zylinder (12) erstreckt.

6. Einheit nach Anspruch 4 oder Anspruch 5, bei der die Verschlussvorrichtung ferner eine Ringdichtung (6) umfasst, die dicht zwischen den Kolben (10) und den Zylinder (12) gepresst wird, wenn sich der Kolben (10) in der aktiven Position befindet, wobei die Ringdichtung (6) vom Kolben (10) oder vom Zylinder (12) entfernt ist, wenn sich der Kolben (10) in der inaktiven Position befindet.

7. Einheit nach einem der Ansprüche 4 bis 6, ferner umfassend einen Flansch (40), an dem der Kolben (10) zum Anschlag gelangt, wenn er sich in der inaktiven Position befindet, wobei der Flansch (40) einstellbar ist, um die Amplitude der Bewegung des Kolbens (10) zwischen seiner aktiven Position und seiner inaktiven Position zu verändern.

8. Einheit nach einem der Ansprüche 2 bis 7, bei der der Ableitungskanal (8) einen Abschnitt (48, 50) umfasst, der sich über den Zylinder (12) hinaus zwischen dem Versorgungskanal (4) und dem Körper (32) erstreckt.

9. Einheit nach einem der Ansprüche 2 bis 8, bei der:
- der Versorgungskanal (4, 5) einen ersten Teil (4) aufweist, der sich außerhalb der Lagerung (2) bis zu der Kammer (14) erstreckt, und einen zweiten Teil (5), der sich von der Kammer (14) bis zum Inneren der Lagerung (2) erstreckt,
- der erste Teil (4) des Versorgungskanals in Bezug zum Zylinder (12) gehalten wird,
- eine dynamische Abdichtungsvorrichtung (22) dicht einerseits mit dem ersten Teil (4) des Versorgungskanals und andererseits mit einer Bohrung (28) zusammenwirkt, die in dem Kolben (10) vorgesehen ist, und
- die Kammer (14), die mit dem Versorgungskanal (4) in Verbindung steht, in dem Kolben (10) angeordnet und von der dynamischen Abdichtungsvorrichtung (22) begrenzt ist.

10. Einheit nach dem vorhergehenden Anspruch, bei der die dynamische Abdichtungsvorrichtung (22) eine Vielzahl von Scheiben (24) umfasst, zwischen denen eine Vielzahl von Ringdichtungen (26) angeordnet ist.

11. Einheit nach einem der Ansprüche 9 oder 10, bei der die Bohrung (28) des Kolbens (10) zum Zylinder (12) koaxial ist.

12. Einheit nach einem der Ansprüche 2 bis 11, bei der:
- die Wand (3) der Lagerung (2) einen Durchgang (30) aufweist, und
- der Körper (32) in dem Durchgang (30) angeordnet ist.

13. Einheit nach dem vorhergehenden Anspruch, bei der:
- der Körper (32) einen Absatz (34) und eine Außenfläche mit Gewinde (36) aufweist,
- die Einheit ferner eine Befestigungsmutter (38) umfasst, die auf die Außenfläche mit Gewinde (36) des Körpers (32) geschraubt ist, und
- die Wand (3) zwischen dem Absatz (34) des Körpers (32) und der Befestigungsmutter (38) befestigt ist.
